# FASCICULE DE BREVET EUROPEEN

(11) **EP 0 432 002 B1**
(45) Date de publication et mention de la délivrance du brevet: **05.01.1994**
(21) Numéro de dépôt: 90403269.5
(22) Date de dépôt: 20.11.1990
(51) Int. Cl.: A01G 7/00, G01W 1/04

(54) **Dispositif pour l'acquisition automatique et continue de données caracterisant un ensemble sol, plante, climat**
Vorrichtung zur automatischen und fortlaufenden Ermittlung von Parametern, die das Zusammenwirken von Boden, Pflanzen und Klima kennzeichnen
Device for the automatic and continuous measurement of parameters characterising the interaction of soil, plant and climate

(30) Priorité: 21.11.1989 FR 8915262
(43) Date de publication de la demande: 12.06.1991
(73) Titulaire: AQUA CROP, F-64000 Pau (FR)
(72) Inventeur: Garrigues, Claude, F-64150 Mourenx (FR); Poullain, Patrick, F-64000 Pau (FR)
(74) Mandataire: Armengaud Ainé, Alain

(56) Documents cités:
- FR-A- 2 514 607
- ELEKTRONIK vol. 30, no. 18, 11 septembre 1981, pages 104-108, München, DE; U. KNUEPFER: "Klimastation erfasst 16 Parameter"
- ANNALES AGRONOMIQUES vol. 26, no. 1, 1975, pages 19-40, Paris, FR; A. PERRIER et al.: "Mesure automatique du bilan d'énergie d'une culture. Exemples d'application"

## Description

La présente invention a pour objet un dispositif permettant une acquisition automatique et continue de données, caractérisant notamment un ensemble sol, plantes, climat, et propres à représenter les réactions d'une culture de plantes au sein de son environnement. L'invention a notamment pour but de fournir en permanence une évaluation précise du bilan d'énergie de cette culture et de l'évapotranspiration réelle des plantes, c'est-à-dire de la quantité d'eau perdue par celles-ci dans les conditions naturelles où elles se trouvent.

On sait en effet que la connaissance du bilan d'énergie d'une culture et de l'évapotranspiration réelle, permet notamment de déterminer de manière précise un coefficient dit d'évapotranspiration, déduit de ces données par des formules connues dans la littérature technique (voir notamment Ann. Agronomiques 1975 - 26(1) p. 19 à 40 - Mesure automatique du bilan d'énergie d'une culture et exemples d'implication - A. Perrier et al).

Ainsi et selon ce document, la mesure des flux de chaleur sensible et latente, entrant dans l'équation du bilan d'énergie d'une culture en même temps que le rayonnement net et la densité de flux de chaleur par conduction à la surface du sol, ainsi que la détermination de l'évapotranspiration réelle, sont jusqu'à présent obtenus à partir des valeurs des gradients de température sèche et humide de l'air au-dessus du couvert végétal, entre deux niveaux de relevés, de part et d'autre d'un axe de référence intermédiaire, ces relevés étant effectués au moyen d'appareils connus sous le nom de psychromètres. Ces mesures nécessitent l'usage d'un ensemble mécanique qui pivote ou se déplace par rapport à l'axe de référence, de manière à inverser les positions relatives de deux psychromètres, pour éliminer des erreurs systématiques dans l'acquisition des résultats mesurés. Le calcul peut ensuite, à partir des données ainsi obtenues, déterminer l'écart de température dans l'air et la concentration de vapeur d'eau au-dessus de la culture ainsi que les flux de chaleur recherchés. Ces paramètres permettent à leur tour, en fournissant des données caractéristiques du micro-climat relatif à la culture étudiée, de mieux estimer la consommation et surtout les besoins en eau de cette culture, et par suite d'assurer une maîtrise optimale des facteurs de production (sol, eau, engrais, variétés génétiques...), d'apprécier la résistance dite stomatique de la plante et donc l'adaptation de celle-ci dans son milieu, d'anticiper utilement sur les risques de dégradation (maladies de la plante, stress hydrique...), de lutter préventivement contre les risques d'infestation parasitaire au cours de l'évolution de la croissance de la plante et enfin d'estimer avec une raisonnable approche, la productivité pouvant être attendue de la culture menée à son terme et donc la rentabilité de l'exploitation.

Or, la mesure de l'évapotranspiration réelle au moyen de deux psychromètres montés en différentiel, de la façon décrite par exemple dans les FR-A-2 460 575, 2 514 607 et 2 568 372 sous diverses formes de réalisation, c'est-à-dire au moyen d'appareils utilisant, en combinaison avec des capteurs de mesure de la température et d'autres paramètres (thermocouples, sondes platines, fluxmètres, anémomètres ...), des organes d'humidification permanente d'une mèche au sein de laquelle est relevée la température humide du milieu ambiant, nécessite des investissements relativement élevés et surtout exige des manipulations délicates qui rendent l'usage de ces appareils peu propice à une utilisation par des particuliers et à une fabrication en grande série, la mise en oeuvre efficace de ces psychromètres étant essentiellement réservée à des laboratoires spécialisés et hautement équipés.

La présente invention concerne un dispositif qui vise à l'acquisition de données climatiques propres à permettre le calcul direct du bilan d'énergie et de l'évapotranspiration réelle produite, elle-même appréciée par une mesure de la température de l'air et de l'humidité relative du milieu, ou encore la concentration de la vapeur d'eau dans l'air, qui soit d'une exploitation facile et n'exige pas une mise en oeuvre complexe, tant en ce qui concerne les moyens utilisés que dans le traitement des résultats qu'ils procurent.

L'invention concerne plus particulièrement un dispositif qui soit robuste et fiable, apte à fournir des mesures sûres et répétitives dans des lieux éventuellement éloignés ou d'accès difficile, n'exige qu'un entretien minimal, soit simple à mettre en oeuvre, notamment par un exploitant agricole sans nécessiter de précautions particulières et surtout donne une information immédiatement exploitable par un système de traitement approprié.

Selon l'invention, ce dispositif, pour l'acquisition automatique et continue de données caractérisant notamment un ensemble sol, plantes, climat, et propres à déterminer les réactions d'une culture de plantes formant un couvert végétal, au sein de son environnement, de manière à fournir le bilan d'énergie de la culture, l'évapotranspiration réelle correspondante et la résistance stomatique du couvert végétal, comportant un mât ou support analogue, généralement vertical, s'élevant au-dessus du couvert de la culture pour le support d'un ensemble de mesure et éventuellement de divers capteurs complémentaires, se caractérise en ce que cet ensemble de mesure est constitué par un élément de tube, s'étendant horizontalement, disposé parallèlement à la culture et contenant un capteur de température, notamment du genre thermocouple ou sonde platine, et un capteur d'hygrométrie relative assurant la mesure d'un courant d'air aspiré par un ventilateur ou une pompe, monté à une extrémité ouverte de l'élément de tube, l'autre extrémité étant solidarisée et raccordée à deux conduits coaxiaux, opposés et identiques, s'étendant de préférence verticalement de part et d'autre de l'axe de l'élément de tube et débouchant à deux niveaux de référence symétriques par rapport à cet axe axe au-dessus du couvert de la culture, chaque conduit comportant au moins une vanne propre à ouvrir ou fermer alternativement l'un ou l'autre conduit de telle sorte que le ventilateur ou la pompe aspire de l'air recueilli séparément dans ces conduits en provenance des deux niveaux.

Avantageusement, chacun des conduits coaxiaux comporte, à son extrémité opposée à l'élément de tube horizontal, un coude dont l'extrémité terminale est parallèle à l'élément et comporte un filtre pour l'air aspiré dans le conduit correspondant.

Selon une autre caractéristique, les conduits coaxiaux et l'élément de tube sont chemisés par une enveloppe tubulaire de protection commune, propre à limiter l'échauffement parasite de l'air aspiré avant qu'il n'atteigne les capteurs de température et d'hygrométrie. Utilement, l'enveloppe de protection peut être extérieurement de couleur blanche, pour réduire l'effet du rayonnement solaire.

De préférence, le capteur de température est constitué par un élément du type à sonde de platine, monté dans un pont de mesure, alimenté par une tension de référence donnée. Avantageusement, le capteur d'hygrométrie est pour sa part un capteur résistif, associé à une source alternative à fréquence fixe et d'amplitude constante, alimentant le capteur par le biais d'un diviseur de tension, la polarisation alternative du capteur permettant d'éviter une modification dans le temps de ses propriétés. Tout autre capteur d'humidité relative (capteur capacitif par exemple) peut naturellement être utilisé dans les mêmes conditions.

Selon une autre caractéristique également, les deux capteurs sont réunis à un circuit électronique de traitement, délivrant des signaux électriques représentatifs des mesures effectuées, ce circuit étant de préférence contenu dans un coffret étanche de protection, porté par le mât ou séparé de celui-ci. Avantageusement, le coffret est disposé à l'intérieur d'une cheminée externe, munie d'un capot déflecteur à son extrémité supérieure, un espace suffisant étant ménagé entre le coffret et la paroi interne de la cheminée pour autoriser, par convection naturelle, une circulation de l'air autour du coffret.

Dans un mode de réalisation particulier de l'invention, le mât ou support de l'ensemble de mesure est maintenu vertical au moyen d'élingues de soutènement, réparties autour de son axe et respectivement fixées en un point donné du mât et à des piquets d'immobilisation au sol. De préférence, le mât est formé d'éléments modulaires, à emboîtements successifs, permettant d'augmenter sa hauteur au fur et à mesure de la croissance de la culture.

Selon le cas, le dispositif considéré peut être muni d'autres capteurs, fournissant des mesures complémentaires dans l'environnement, en particulier un capteur de rayonnement solaire et un anémomètre et une girouette, donnant respectivement la force et le sens du vent. Egalement, le dispositif peut comporter des capteurs enfouis dans le sol ou disposés au voisinage immédiat de sa surface, notamment pour mesurer le flux de chaleur par conduction dans celui-ci. De même, peuvent être prévus des appareils de mesure spécifiques pour relever la durée d'ensoleillement, la hauteur des précipitations et la tension d'eau interne du sol, la température de l'air et du sol à plusieurs niveaux.

D'autres caractéristiques du dispositif selon la présente invention apparaîtront encore à travers la description qui suit d'un exemple de réalisation, donné à titre indicatif et non limitatif, en référence aux dessins annexés sur lesquels :
- La Figure 1 est une vue schématique en perspective d'une installation de mesure, propre à permettre l'acquisition de données relatives à une culture conformément à l'invention.
- La Figure 2 est une vue en coupe à plus grande échelle du dispositif mis en oeuvre pour mesurer la température de l'air et l'hygrométrie dans des conditions permettant d'établir, après un traitement approprié, le bilan d'énergie et l'évaporation réelle de la culture considérée.
- La Figure 3 illustre la cheminée de protection associée au coffret contenant le circuit électronique de traitement des données fournies par les capteurs du dispositif.
- Les Figures 4 et 5 illustrent schématiquement les montages électriques des capteurs, respectivement pour la mesure de la température et de l'hygrométrie.

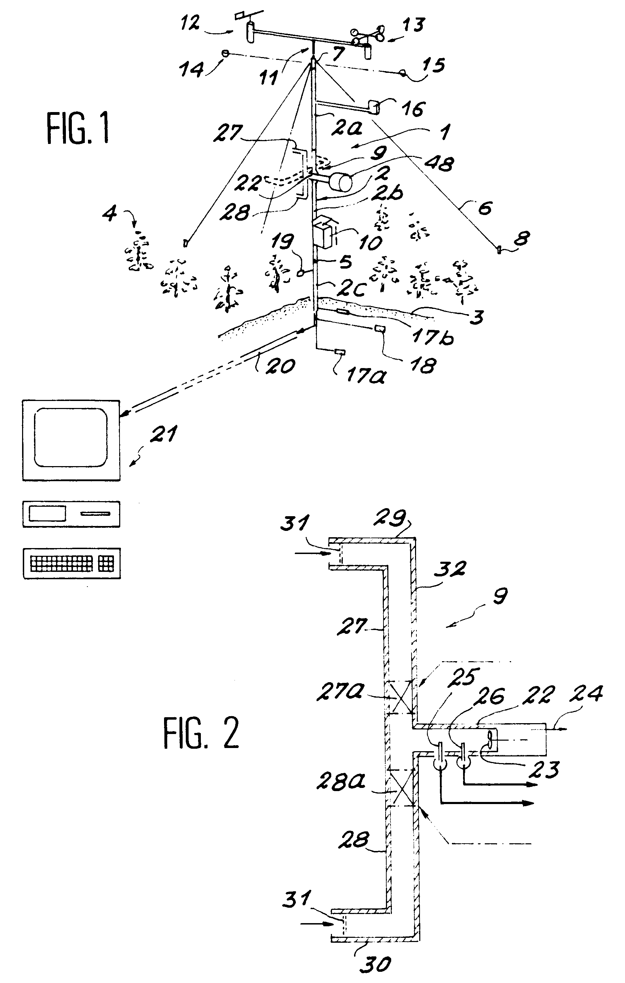

Dans l'exemple de réalisation illustré sur la Figure 1, l'installation de mesure considérée, désignée dans son ensemble par la référence 1, se compose notamment d'un mât ou support analogue 2, dont l'extrémité inférieure est enfoncée dans le sol ou posé sur une plaque support 3, de manière à s'étendre verticalement au-dessus du couvert d'une culture de plantes 4, schématiquement représentée sur le dessin. Le mât 2 présente de préférence une structure formée d'éléments successifs tels que 2a, 2b, 2c, à emboîtements 5. Des élingues 6 sont par ailleurs réparties régulièrement autour du mât 2, en étant fixées d'une part à une pièce d'attache 7 prévue au voisinage de la partie supérieure du mât et d'autre part à des piquets d'immobilisation au sol 8.

Selon l'invention, l'installation 1 est notamment prévue pour assurer une mesure appropriée de la température de l'air ambiant au-dessus du couvert de la culture 4 et de l'hygrométrie, notamment en deux niveaux de référence, dans des conditions permettant, par application de formules adaptées, un calcul du bilan d'énergie de la culture et l'évaporation réelle correspondante. A cet effet, le mât 2 supporte un dispositif spécifique 9, dont le détail sera explicité ci-après en relation avec la Figure 2, les informations fournies par les capteurs dont est muni ce dispositif étant acheminées vers un circuit électronique de traitement, monté dans un coffret de protection 10, également porté par le mât mais qui pourrait éventuellement être séparé de celui-ci. Ce dernier supporte par ailleurs d'autres moyens de mesure, tels que par exemple, à l'extrémité d'une vergue 11, une girouette 12 et un anémomètre 13, donnant respectivement le sens et la force du vent. Sur le mât peuvent être également montés un appareil de mesure 14 de la durée d'ensoleillement, un capteur 15 de l'intensité du rayonnement solaire et du rayonnement réfléchi par le sol et un pluviomètre 16 pour la mesure de la hauteur des précipitations reçues par la culture. Dans le sol 3, sont encore enfouis d'autres capteurs tels que 17a et 17b, propres, à donner à des profondeurs différentes, une estimation du flux de chaleur par conduction par le sol, ainsi qu'un capteur tensiométrique 18 et des capteurs de température sol à différents niveaux. Un capteur 19 peut également donner la température de l'air sous le couvert de la culture 4.

Toutes les données ainsi recueillies sont stockées puis transmises, par des voies appropriées (fils, radio, téléphone, satellite) vers un calculateur 21, adapté à traiter ces données au moyen d'un logiciel expert et le cas échéant de modèles localisés, dont la conception et l'exploitation, si elles ne concernent pas directement l'invention, en constituent néanmoins le prolongement, en permettant une exploitation optimale des informations recueillies en vue d'une meilleure gestion des possibilités de la culture, et au choix adapté des solutions appropriées pour assurer sa protection vis-à-vis des agressions extérieures et améliorer sa productivité.

La Figure 2 illustre à plus grande échelle le dispositif 9 pour la mesure de la température de l'air et du degré d'hygrométrie ambiants, au-dessus du couvert de la culture. Il comporte notamment un élément de tube central 22, ouvert à ses extrémités et au voisinage de l'une desquelles est monté un mécanisme de ventilation ou de pompe 23, adapté à aspirer l'air à travers l'élément de tube, en le rejetant ensuite vers l'extérieur selon le sens de la flèche 24. Dans l'élément 22, en amont du ventilateur ou de la pompe 23 vis-à-vis du sens d'écoulement de l'air, sont disposés deux capteurs 25 et 26, dont l'un est un capteur de température, notamment constitué par une sonde de platine, tandis que l'autre est un capteur résistif d'hygrométrie, c'est-à-dire un ensemble dont la résistance électrique est fonction du degré d'humidité présent dans l'air aspiré.

L'élément de tube 22 débouche à son extrémité opposée dans une partie commune au centre de deux conduits coaxiaux et identiques, respectivement 27 et 28, formant ainsi avec l'élément 22 un T dont les extrémités de la branche transversale comportent des coudes 29 et 30, s'étendant parallèlement à l'élément 22. Dans chacun des conduits 27 et 28 sont montées des vannes ou autres organes analogues, respectivement 27a et 28a, permettant par une commande appropriée, d'ouvrir ou de fermer alternativement chaque conduit de telle sorte que l'air aspiré par le ventilateur ou pompe 23 provienne de la région située au-dessus du couvert de la culture, au droit de l'un ou l'autre des coudes 29 ou 30.

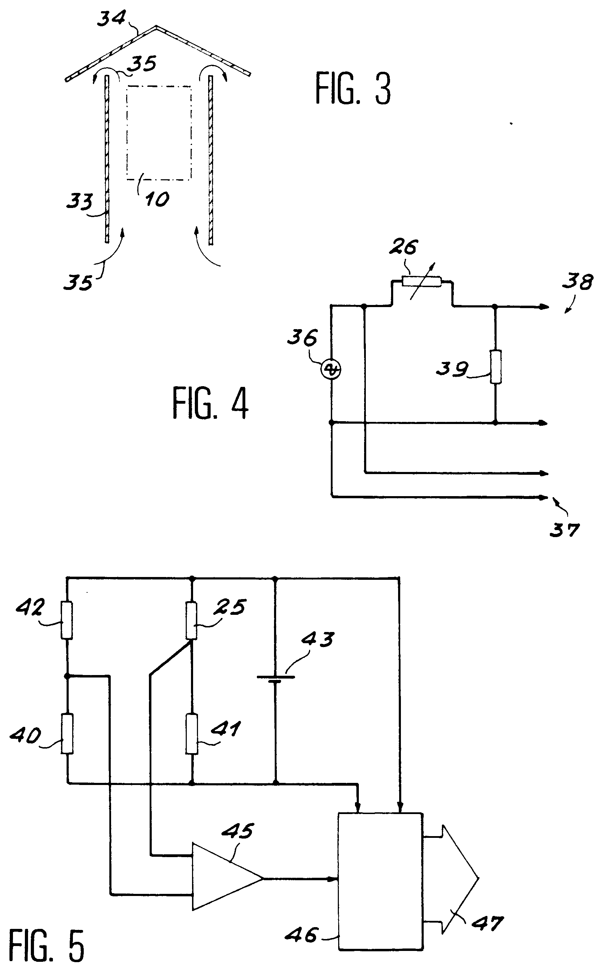

L'élément 22 est supporté par le mât (Figure 1) de façon à s'étendre horizontalement, les conduits 27 et 28 étant verticaux et parallèles au mât 2. Les coudes 29 et 30 sont ouverts dans l'air ambiant au-dessus du couvert de la culture 4 et sont de préférence munis de filtres tels que 31. L'élément de tube central 22 et les conduits opposés 27 et 28 sont avantageusement disposés à l'intérieur d'une enveloppe commune 32 ou d'un autre tube, une couche d'air libre séparant le tube enveloppe du tube d'amenée, destinée à assurer une protection convenable du dispositif, notamment vis-à-vis du rayonnement solaire, l'enveloppe 32 étant de préférence peinte en blanc ou revêtue d'un matériau ayant un pouvoir de réflexion approprié. Comme illustré par ailleurs sur la Figure 3, le coffret 10 contenant le circuit électronique de traitement des données fournies par les capteurs 25 et 26 est lui-même disposé au centre d'une cheminée de protection externe 33, ouverte à ses extrémités et associée à sa partie supérieure à un capot déflecteur 34 de telle sorte que l'air extérieur puisse librement circuler entre la paroi interne de la cheminée et le coffret 10 par convexion naturelle, en assurant l'évacuation des calories et en participant également à la protection du coffret vis-à-vis du rayonnement solaire.

Les Figures 4 et 5 illustrent enfin les montages électriques, de préférence adoptés pour les capteurs résistifs d'hygrométrie et de sonde platine de température du dispositif. Ainsi sur la Figure 4, la résistance du capteur 26 est représentée montée en série avec une source de tension alternative 36, à fréquence fixe et à amplitude constante, la tension d'entrée étant mesurée en 37, la tension de sortie étant à son tour mesurée en 38 aux bornes d'une résistance fixe 39. Avantageusement, la fréquence de la source est voisine de 1 Khz, la polarisation alternative du capteur ainsi réalisée permettant d'éviter une modification cristalline de ce dernier et par suite un détérioration progressive, risquant de fausser les mesures.

Le schéma de la Figure 5 illustre pour sa part le montage du capteur de température 25, la sonde platine 3 fils qu'il comprend étant disposée dans un pont de mesure comportant trois résistances fixes, respectivement 40, 41 et 42. Le pont est alimenté par une source de tension continue 43, la tension de sortie mesurée en 44 entre les bornes du pont étant acheminée vers un amplificateur 45 et un convertisseur analogique digital 46, lui-même alimenté par la source 43 comme tension de référence. La sortie 47 du convertisseur est acheminée vers le calculateur 21 (Figure 1). Ce montage permet en particulier qu'une variation sur la tension de référence, due au vieillissement des composants de la source ou aux dérives thermiques, soit transmise à la fois au pont de mesure et au convertisseur, l'ensemble étant ainsi rendu pratiquement insensible à ces variations.

A partir des mesures ainsi effectuées et en particulier des données représentant respectivement la température sèche de l'air aux deux niveaux de prélèvement, et l'humidité relative également à ces mêmes niveaux, on détermine par le calcul, notamment à l'aide d'un logiciel approprié, la température humide, correspondant précisément à l'hygrométrie relevée, la mesure différentielle de température et de l'humidité relative entre les deux niveaux effectuées présentant l'avantage d'éliminer toute erreur systématique apportée par les capteurs. Connaissant la valeur de la résistance du capteur d'hygrométrie et la température de l'air ambiant, on détermine ensuite par interpolation la valeur de l'humidité relative et par approximations successives, la température humide correspondant à celle-ci. Ayant relevé par ailleurs le rayonnement net (par le capteur 15) et le flux de chaleur par conduction dans le sol (par le capteur 18 - Figure 1), et en déduisant des mesures précédentes le flux de chaleur latente, et le flux de chaleur sensible dans l'air d'autre part, on peut alors établir le bilan d'énergie de la culture, l' évapotranspiration réelle et la résistance stomatique du couvert végétal par application de formules connues déjà citées.

Les données ainsi collectées sur le terrain par l'installation, une fois traitées par le calculateur 21, permettent ensuite au moyen d'un logiciel expert de déduire de la connaissance de la consommation en eau de la culture selon les facteurs climatiques et de son état biologique et énergétique, un ensemble d'informations particulièrement utiles pour le contrôle de la production de la culture et la prévision des risques phyto-sanitaires susceptibles de se produire au cours de sa croissance, la prévision de rendement et la date de récolte. L'intégration dans la base de données du logiciel logiciel expert des informations ainsi acquises, voire de toute autre, permet par ailleurs de constituer un système d'aide à la décision pour l'utilisateur, immédiatement disponible et propre à être exploité par des procédures simples, facilement accessibles.

Il en résulte des avantages remarquables, l'installation procurant à l'utilisateur des indications en permanence remises à jour sur les besoins en eau de la culture considérée, ainsi que sur les quantités et les fréquences des apports nécessaires, en fonction de la croissance et du suivi de cette dernière, l'estimation de rendement réactualisée et la date de récolte.

Bien entendu, il va de soi que l'invention ne se limite pas à l'exemple de réalisation décrit et représenté ci-dessus ; elle en embrasse au contraire toutes les variantes décrites dans les revendications. En particulier, il va de soi que la liaison entre le calculateur et le dispositif d'acquisition des données pourrait être différent et ne pas utiliser un câble de liaison mais un système de transmission à distance par ligne téléphonique ou tout autre moyen de communication, du genre modem, réseau commuté, radiofréquence, infrarouge... .

De même, au lieu de disposer le capteur de température et le capteur d'hygrométrie dans l'élément de tube horizontal 22 auxquels se raccordent les conduits coaxiaux opposés et identiques verticaux 27 et 28, avec une vanne ou organe analogue logé dans chacun de ces conduits pour permettre un prélèvement alternatif de l'air à deux niveaux distincts, on pourrait prévoir de monter un ventilateur unique dans l'élément de tube médian 22 et des capteurs de température et d'hygrométrie respectivement dans chacun des conduits verticaux. En outre, dans une autre variante équivalente, le ventilateur unique 23, disposé dans l'élément de tube médian, pourrait être substitué par deux ventilateurs distincts, montés respectivement dans chacun des conduits verticaux, de manière à aspirer l'air prélevé par ces conduits alternativement dans l'un et dans l'autre pour le renvoyer vers les capteurs disposés dans l'élément de tube médian.

Par ailleurs, afin de limiter encore les erreurs dans les mesures effectuées au moyen des capteurs de température 25 et d'humidité relative 26 du fait de la dispersion de ces capteurs, on peut utilement prévoir de monter le dispositif 9 de telle sorte qu'il puisse pivoter de 90° vis-à-vis du mât 2, sous l'effet d'une commande appropriée 48, mécanique ou électrique, à déclenchement manuel ou automatique, les deux conduits opposés 27 et 28 étant alors disposés dans le plan horizontal, perpendiculairement au mât, comme schématisé en traits pointillés sur la Figure 1.

Dans cette position, les capteurs 25 et 26 peuvent être étalonnés en étant situés à un même niveau, pendant un laps de temps donné, de préférence déterminé par le logiciel du calculateur 21, pouvant s'étendre de quelques minutes à quelques heures, le même logiciel prenant en compte automatiquement les données relatives à cette échantillonnage, recueillies par les capteurs. Une fois cette opération achevée, le dispositif 9 est ramené en position verticale, les coefficients d'étalonnage étant calculés et sauvegardés par le calculateur avant d'être pris en compte pour corriger systématiquement les erreurs des mesures, préalablement à l'établissement du bilan d'énergie de la culture et de la valeur de l'évapotranspiration réelle correspondante.

L'avantage d'une telle disposition est notamment de permettre le changement des capteurs sans inconvénient, pour des raisons de maintenance ou autres, sans avoir à recourir à leur étalonnage préalable en laboratoire, cet étalonnage étant réalisé par l'appareil lui-même en procurant dès lors une qualité optimale des mesures effectuées.

## Revendications

1. Dispositif pour l'acquisition automatique et continue de données caractérisant notamment un ensemble sol, plante, climat, et propres à déterminer les réactions d'une culture de plantes formant un couvert végétal, au sein de son environnement, de manière à fournir le bilan d'énergie de la culture, l'évapotranspiration réelle correspondante et la résistance stomatique du couvert végétal, ce dispositif comportant un mât ou support analogue (2), généralement vertical, s'élevant au-dessus du couvert de la culture (4) pour le support d'un ensemble de mesure (9) et éventuellement de divers capteurs complémentaires, et étant caractérisé en ce que cet ensemble de mesure est constitué par un élément de tube (22), s'étendant horizontalement, disposé parallèlement à la culture et contenant un capteur de température (25), notamment du genre thermocouple ou sonde platine, et un capteur d'hygrométrie relative (26) assurant la mesure d'un courant d'air aspiré par un ventilateur ou une pompe (23), monté à une extrémité ouverte de l'élément de tube, l'autre extrémité étant solidarisée et raccordée à deux conduits coaxiaux (27,28), opposés et identiques, s'étendant de préférence verticalement de part et d'autre de l'axe de l'élément de tube et débouchant à deux niveaux de référence symétriques par rapport à cet axe axe au-dessus du couvert de la culture (4), chaque conduit comportant au moins une vanne (27a,28a) propre à ouvrir ou fermer alternativement l'un ou l'autre conduit de telle sorte que le ventilateur ou la pompe aspire de l'air recueilli séparément dans ces conduits en provenance des deux niveaux.

2. Dispositif selon la revendication 1, caractérisé en ce que chacun des conduits (27,28) comporte, à son extrémité opposée à l'élément de tube horizontal (22), un coude (29,30) dont l'extrémité terminale est parallèle à l'élément et comporte un filtre (31) pour l'air aspiré dans le conduit correspondant.

3. Dispositif selon la revendication 1 ou 2, caractérisé en ce que les conduits (27,28) et l'élément de tube (22) sont chemisés par une enveloppe tubulaire de protection commune (32), propre à limiter l'échauffement parasite de l'air aspiré avant qu'il n'atteigne les capteurs de température et d'hygrométrie (25,26).

4. Dispositif selon la revendication 3, caractérisé en ce que l'enveloppe de protection (32) est extérieurement de couleur blanche, pour réduire l'effet du rayonnement solaire.

5. Dispositif selon l'une quelconque des revendications 1 à 4, caractérisé en ce que le capteur de température (25) est constitué par un élément du type à sonde platine, monté dans un pont de mesure, alimenté par une tension de référence donnée.

6. Dispositif selon l'une quelconque des revendications 1 à 4, caractérisé en ce que le capteur d'hygrométrie (26) est un capteur résistif, associé à une source alternative (36) à fréquence fixe et d'amplitude constante, alimentant le capteur par le biais d'un diviseur de tension (39).

7. Dispositif selon l'une quelconque des revendications 1 à 6, caractérisé en ce que les deux capteurs (25,26) sont réunis à un circuit électronique de traitement ou calculateur (21), délivrant des signaux électriques représentatifs des mesures effectuées, ce circuit étant de préférence contenu dans un coffret étanche de protection (10), porté par le mât (2) ou séparé de celui-ci.

8. Dispositif selon la revendication 7, caractérisé en ce que le coffret (10) est disposé à l'intérieur d'une cheminée externe (33), munie d'un capot déflecteur (34) à son extrémité supérieure, un espace suffisant étant ménagé entre le coffret et la paroi interne de la cheminée pour autoriser, par convection naturelle, une circulation de l'air autour du coffret.

9. Dispositif selon l'une quelconque des revendications 1 à 8, caractérisé en ce que le mât ou support (2) de l'ensemble de mesure (9) est maintenu vertical au moyen d'élingues de soutènement (6) réparties autour de son axe et respectivement fixées en un point donné (7) du mât et à des piquets d'immobilisation au sol (8).

10. Dispositif selon la revendication 9, caractérisé en ce que le mât (2) est formé d'éléments modulaires, à emboîtements successifs, permettant d'augmenter sa hauteur au fur et à mesure de la croissance de la culture (4).

11. Dispositif selon l'une quelconque des revendications 1 à 9, caractérisé en ce qu'il comporte d'autres capteurs, fournissant des mesures complémentaires dans l'environnement, en particulier un capteur de rayonnement solaire (15), et un anémomètre (13) et une girouette (12), donnant respectivement la force et le sens du vent.

12. Dispositif selon la revendication 11, caractérisé en ce qu'il comporte également des capteurs (17) enfouis dans le sol ou disposés au voisinage immédiat de sa surface, notamment pour mesurer le flux de chaleur par conduction dans celui-ci.

13. Dispositif selon la revendication 11, caractérisé en ce qu'il comporte en complément des appareils de mesure spécifiques pour relever la durée d'ensoleillement (14), la hauteur des précipitations (16) et la tension hydrique interne du sol, des capteurs de température dans le sol.

14. Dispositif selon l'une quelconque des revendications 1 à 13, caractérisé en ce que l'ensemble de mesure (9) peut pivoter de 90° par rapport au mât (2), de manière à disposer les conduits (27,28) dans un plan horizontal, pour permettre un étalonnage des capteurs (25,26), préalable aux mesures réalisées au moyen de ces capteurs.

## Claims

1. An apparatus for the automatic and continuous acquisition of data characterising in particular an overall situation involving soil, plant and climate and adapted to determine the reactions of a plant culture forming an area of vegetation, within its environment, in order to provide the energy balance of the culture, the corresponding real loss of moisture through evaporation and the stomatic resistance of the plant cover, the said apparatus comprising a generally vertical mast or similar support (2) rising above the cultivated area (4) to support a measuring assembly (9) and possibly various supplementary sensors, and being characterised in that this measuring assembly is constituted by a tube element extending horizontally and disposed parallel with the crop and containing a temperature sensor (25), particularly of the thermocouple or platinum probe type and a relative hygrometry sensor (26) for measuring a flow of air drawn in by a fan or a pump (23), mounted at an open end of the tube element, the other end being made rigid with and connected to two coaxial oppositely disposed and identical ducts (27, 28) preferably extending vertically on either side of the axis of the tube element and discharging at two reference levels which are symmetrical in relation to the said axis above the cultivated area (4), each duct comprising at least one valve (27a, 28a) adapted alternatively to open or close one or other duct so that the fan or the pump draws separately collected air into these ducts from the two levels.

2. An apparatus according to Claim 1, characterised in that each of the ducts (27, 28) comprises at its end opposite the horizontal tube element (22) a bend (29, 30) the terminal end of which is parallel with the element and comprises a filter (31) for the air drawn into the corresponding duct.

3. An apparatus according to Claim 1 or 2, characterised in that the ducts (27, 28) and the tube element (22) are sheathed in a common tubular protective casing (32) adapted to limit the incidental heating of the drawn-in air prior to its reaching the temperature and hygrometry sensors (25, 26).

4. An apparatus according to Claim 3, characterised in that the protective casing (32) is white on the outside in order to reduce the effects of the sun's rays.

5. An apparatus according to any one of Claims 1 to 4, characterised in that the temperature sensor (25) consists of an element of the platinum probe type mounted in a measuring bridge and supplied with a given reference potential.

6. An apparatus according to any one of Claims 1 to 4, characterised in that the hygrometry sensor (26) is a resistance type of sensor associated with a fixed frequency and constant amplitude alternating current source (36) supplying the sensor via the bias of a potential divider (39).

7. An apparatus according to any one of Claims 1 to 6, characterised in that the two sensors (25, 26) are connected to an electronic processing circuit or computer (21) delivering electrical signals representing the measurements performed, the said circuit preferably being contained in a protective sealing-tight casing (10) carried by or separate from the mast (2).

8. An apparatus according to Claim 7, characterised in that the casing (10) is disposed inside an outer chimney (33) provided at its top end with a deflecting cowl (34), sufficient space being provided between the casing and the inside wall of the chimney to allow air to circulate naturally by convection around the casing.

9. An apparatus according to any one of Claims 1 to 8, characterised in that the mast or support (2) carrying the measuring assembly (9) is maintained vertical by means of guy ropes (6) distributed around its axis and respectively fixed to a given point (7) on the mast and also to immobilising pegs set in the ground (8).

10. An apparatus according to Claim 9, characterised in that the mast (2) consists of modular elements which are successively fitted by socket engagement making it possible to increase the height of the mast as the crop (4) grows.

11. An apparatus according to any one of Claims 1 to 9, characterised in that it comprises further sensors providing additional measurements from the environment, particularly a solar radiation sensor (15) and an anemometer (13) along with a wind vane (12) respectively indicating the force and direction of the wind.

12. An apparatus according to Claim 11, characterised in that it likewise comprises sensors (17) sunk into the ground or disposed in the immediate vicinity of its surface, particularly for measuring the flow of heat by conduction in the soil.

13. An apparatus according to Claim 11, characterised in that it additionally comprises specific measuring instruments for recording the duration of sunlight (14), the amount of rainfall (16) and the moisture tension within the soil and also soil temperature sensors.

14. An apparatus according to any one of Claims 1 to 13, characterised in that the measuring assembly (9) is able to pivot through 90° in relation to the mast (2) in order to dispose the ducts (27, 28) in a horizontal plane to allow calibration of the sensors (25, 26) prior to measurements being carried out by means of these sensors.

## Patentansprüche

1. Vorrichtung zur automatischen und kontinuierlichen Ermittlung von Parametern, die besonders das Zusammenwirken von Boden, Pflanzen und Klima kennzeichnen und geeignet sind zur Bestimmung der Reaktionen einer Pflanzenkultur, die im Bereich ihrer Umgebung eine den Boden mehr oder weniger bedeckende Pflanzung bildet, um auf diese Weise die Energiebilanz der Kultur, die entsprechende reale Verdunstungstranspiration (Evapotranspiration) und den Porenwiderstand der Pflanzung zu liefern, wobei diese Vorrichtung einen im allgemeinen vertikalen Mast oder entsprechenden Träger (2) aufweist, der sich über die Pflanzung (4) erhebt, um eine Meßanordnung (9) und gegebenenfalls verschiedene zusätzliche Meßfühler zu tragen, wobei diese Vorrichtung dadurch gekennzeichnet ist, daß diese Meßanordnung aus einem Rohrelement (22) besteht, das sich horizontal erstreckt, parallel zur Kultur angeordnet ist, und einen Temperaturfühler (25), besonders von der Art Thermoelement oder Platindrahtsonde, und einen Meßfühler für die relative Feuchtigkeit (26) enthält und zur Messung eines Luftstromes dient, der von einem Ventilator oder einer Pumpe (23) angesaugt wird, die an einem offenen Ende des Rohrelements montiert sind, wobei das andere Ende feststehend an zwei entgegengesetzte und identische koaxiale Leitungen (27, 28) angeschlossen ist, die sich vorzugsweise vertikal beiderseits der Achse des Rohrelements erstrecken und auf zwei verschiedenen, bezüglich dieser Achse symmetrischen Bezugsniveaus oberhalb der Pflanzung (4) münden, wobei jede Leitung mindestens ein Ventil (27a, 28a) aufweist, das abwechselnd die eine oder andere Leitung öffnet oder schließt, so daß der Ventilator oder die Pumpe die Luft ansaugen, die in diesen Leitungen nach der Herkunft von den zwei Niveaus getrennt aufgefangen wird.

2. Vorrichtung nach Anspruch 1, dadurch gekennzeichnet, daß jede der Leitungen (27, 28) an ihrem dem horizontalen Rohrelement (22) entgegengesetzten Ende ein Knie (29, 30) aufweist, dessen Ende zum Rohrelement parallel ist und ein Filter (31) für die in die entsprechende Leitung angesaugte Luft aufweist.

3. Vorrichtung nach Anspruch 1 oder 2, dadurch gekennzeichnet, daß die Leitung (27, 28) und das Rohrelement (22) von einer gemeinsamen rohrförmigen Schutzhülle (32) umhüllt sind, welche die störende Erwärmung der angesaugten Luft, bevor diese die Temperatur- und Feuchtigkeitsmeßfühler (25, 26) erreicht, begrenzt.

4. Vorrichtung nach Anspruch 3, dadurch gekennzeichnet, daß die Schutzhülle (32) außen weiß ist, um die Wirkung der Sonnenstrahlen zu verringern.

5. Vorrichtung nach einem der Ansprüche 1 bis 4, dadurch gekennzeichnet, daß der Temperaturfühler (25) von einem Element von der Art Platindrahtsonde gebildet wird, das in einer Meßbrücke montiert ist, die mit einer gegebenen Bezugsspannung gespeist wird.

6. Vorrichtung nach einem der Ansprüche 1 bis 4, dadurch gekennzeichnet, daß der Hygrometer-Meßfühler (26) ein Widerstandsfühler ist, der mit einer Wechselstromquelle (36) mit fester Freqeunz und konstanter Amplitude zusammenwirkt, welche den Meßfühler über eine Spannungsteiler (39) speist.

7. Vorrichtung nach einem der Ansprüche 1 bis 6, dadurch gekennzeichnet, daß die zwei Meßfühler (25, 26) mit einem elektronischen Datenbehandlungskreis oder Rechner (21) verbunden sind, der für die durchgeführten Messungen repräsentative elektrische Signale liefert, wobei dieser Schaltkreis vorzugsweise in einem dichten Schutzkasten (10) enthalten ist, der vom Mast (2) getragen oder von diesem getrennt ist.

8. Vorrichtung nach Anspruch 7, dadurch gekennzeichnet, daß der Schutzkasten (10) im Inneren eines Außenkamins (33) angeordnet ist, der an seinem oberen Ende eine Abdeckhaube (34) aufweist, wobei zwischen dem Kasten und der Innenwand des Kamins ein genügender Platz vorgesehen ist, um rings um den Kasten einen Luftstrom durch natürliche Konvektion zu ermöglichen.

9. Vorrichtung nach einem der Ansprüche 1 bis 8, dadurch gekennzeichnet, daß der Mast oder Träger (2) der Meßanordnung (9) mittels Spannseilen (6) vertikal gehalten ist, die rings um seine Achse verteilt und jeweils an einem gegebenen Punkt (7) des Mastes und an in den Boden geschlagenen Pflöcken (Heringen) (8) befestigt sind.

10. Vorrichtung nach Anspruch 9, dadurch gekennzeichnet, daß der Mast (2) aus aufeinanderfolgend ineinandergesteckten modularen Elementen besteht, welche eine Vergrößerung seiner Höhe nach Maßgabe des Wachstums der Pflanzung (4) ermöglichen.

11. Vorrichtung nach einem der Ansprüche 1 bis 9, dadurch gekennzeichnet, daß sie noch andere Meßfühler aufweist, welche komplementäre Messungen in der Umgebung liefern, insbesondere ein Meßgerät für die Sonneneinstrahlung (15), ein Anemometer (13) und eine Windfahne (12), welche jeweils die Stärke und Richtung des Windes liefern.

12. Vorrichtung nach Anspruch 11, dadurch gekennzeichnet, daß sie auch in den Boden versenkte oder in unmittelbarer Nähe der Oberfläche angeordnete Meßfühler (17) aufweist, insbesondere zur Messung des Wärmeflusses durch Leitung in diesem.

13. Vorrichtung nach Anspruch 11, dadurch gekennzeichnet, daß sie als Ergänzung der Geräte zur speziellen Messung der Sonneneinstrahlungsdauer (14), der Niederschlagshöhe (16) und der inneren Wasserspannung des Bodens Temperaturmeßfühler im Boden aufweist.

14. Vorrichtung nach einem der Ansprüche 1 bis 13, dadurch gekennzeichnet, daß die Meßanordnung (9) bezüglich des Mastes (2) um 90° schwenkbar ist, um die Leitungen (27, 28) in einer horizontalen Ebene anzuordnen und so eine Eichung der Meßfühler (25, 26) vor den mit diesen Meßfühlern durchgeführten Messungen zu ermöglichen.
